# EUROPÄISCHE PATENTANMELDUNG

(11) **EP 2 175 648 A1**
(43) Veröffentlichungstag der Anmeldung: **14.04.2010**
(21) Anmeldenummer: 09172690.1
(22) Anmeldetag: 09.10.2009
(51) Int. Cl.: H04N 7/15, A61B 5/00, H04N 7/14

(54) **Video- und/oder Kommunikations-System.**

(30) Priorität: 10.10.2008 DE 102008037433
(71) Anmelder: KBH Kommunikations-Beteiligungs-Holding GMBH, 30900 Wedemark (DE)
(72) Erfinder: Sprenger, Klaus, 30657, Hannover (DE); Sprenger, Imke, 30916, Isernhaben (DE)
(74) Vertreter: Flötotto, Hubert

(57) **Zusammenfassung**

Die Erfindung betrifft ein Video- und/oder Kommunikations-System umfassend eine einem Teilnehmer oder Nutzer zugeordnete Teilnehmerbox (1), die den Zugang zu einem Netzwerk bereitstellt, wobei zur visuellen Kommunikation die Teilnehmerbox (1) mit einem Bildschirm (2) zusammenwirkt, und die Teilnehmerbox (1) mit einem Digital-Medien-Prozessor (3) bestückt ist, der über GSM, UMTS, Kabel, ADSL sowie Satellit mit Datenbanken, mit Einzelteilnehmern und oder Teilnehmergruppen eine Verbindung herstellt, wobei die Verbindungen und/oder Konferenzverbindungen insbesondere auf Bedürfnisse älterer Menschen abgestimmt sind, und wobei die programmierten Verbindungen neben dem sozialen Umfeld der Person auch programmierte Verbindungen zur Analyse und Überwachung von medizinischen Daten, Notrufverbindungen, sowie Betreuungs- und Überwachungsdaten der Person umfassen und wobei die individuellen Daten des Nutzers auf einer zentralen und mehreren dezentralen Datenbanken speicher- und abrufbar sind.

## Beschreibung

### Technisches Umfeld

Die Erfindung betrifft ein Video- und/oder Kommunikations-System, wie es beispielsweise über einen PC mit Internet-Zugang bekannt und üblich ist. Dabei besteht die Möglichkeit mit einem PC und einer Video-Kamera mit einem Teilnehmer direkt zu kommunizieren bzw. auch eine Konferenzschaltung mit mehreren Teilnehmern herzustellen.

Infolge der demografischen Entwicklung gilt es dem Phänomen sowie dem sozialen Wandel dahingehend gerecht zu werden, hier der steigenden Lebenserwartung sowie der Zunahme von chronischen Erkrankungen und Internationalisierung ein Video- und/oder Kommunikations-System bereitzustellen, welches den Bedürfnissen gerecht wird. Denn infolge der Bevölkerungsentwicklung gerät die Gesellschaft mit dem bestehenden sozialen und medizinischen Versorgungssystemen unter wirtschaftlichen Druck. Durch die Alterung der Gesellschaft nimmt die Bedeutung der traditionellen Hilfs- und Pflegeleistungen, die früher innerhalb des Familiensystems stattgefunden haben, immer mehr ab. An deren Stelle müssen andere Versorgungsmöglichkeiten treten. Um diesen sich verändernden Ansprüchen und Bedürfnissen zu entsprechen, muss es gelingen, Kontaktpflege, Kommunikation und Unterstützung im Alltag bereit zu stellen. Gerade in den Bereichen der Kommunikation, der Diagnostik, der Akutmedizin, der Prävention und der Nachsorge von chronisch Kranken, sowie der Betreuung, ist ein kosteneffizienter Einsatz in Zukunft gefordert, sowohl im Hinblick auf die menschliche, medizinische als auch die pflegerische Betreuung.

### Aufgabe

Der Erfindung stellt sich somit das Problem ein Video- und/oder Kommunikations-System bereitzustellen, welches den geschilderten Anforderungen gerecht wird.

Erfindungsgemäß wird dieses Problem durch den Hauptanspruch gelöst, wobei vorteilhafte Weiterbildungen der Erfindung sich aus den Unteransprüchen ergeben.

### Lösung

Das erfindungsgemäße Video- und/oder Kommunikations-System umfasst hierbei eine einem Teilnehmer oder Nutzer zugeordnete Teilnehmerbox, die den Zugang zu einem Netzwerk bereitstellt, wobei zur visuellen Kommunikation die Teilnehmerbox mit einem Bildschirm zusammenwirkt und die Teilnehmerbox mit einem Digital-Medien-Prozessor bestückt ist, der über GSM, UMTS, Kabel, ADSL sowie Satellit mit Datenbanken, mit Einzelteilnehmern und/oder Teilnehmergruppen eine Verbindung herstellt, wobei die Verbindungen und/oder Konferenzverbindungen insbesondere auf Bedürfnisse älterer Menschen abgestimmt sind, und wobei die programmierten Verbindungen neben dem sozialen Umfeld der Person auch programmierte Verbindungen zur Analyse und Überwachung von medizinischen Daten, Notrufverbindungen sowie Betreuungs- und Überwachungsdaten der Person umfassen, und wobei die individuellen Daten des Nutzers auf dezentralen Kundendatenbanken speicher- und abrufbar sind.

Somit wird eine Plattform für ältere, pflegebedürftige Menschen geschaffen, die als Video- und/oder Kommunikations-System eine Vielzahl von Ansatzpunkten bereitstellt, die insbesondere die Isolationswirkung des alternden Menschen aufhebt, wobei neben den kommunikativen Möglichkeiten auch die körperlichen Umstände von der Plattform mit erfasst werden. Die Nutzung der neuen Technologie kann über den häuslichen Fernseher verfügbar gemacht werden, wobei nicht nur erhebliche Kosteneinsparungen erzielt werden, sondern auch versucht wird durch das Video-Kommunikations-System, einschließlich des Leistungsangebotes, individuelle Bedürfnisse zu erfüllen, und wobei dies auch zur Verbesserung der individuellen Lebenssituation beiträgt. Der Grundnutzen des Video-Kommunikations-Systems soll das Telefonieren als Bildkommunikation, Konferenzschaltung oder Kommunikation von Teilnehmern untereinander sowie der Datenaustausch zu spezifischen Servern bzw. einer Zentrale sein. Das Dienstleistungssystem mit den entsprechenden Services wird als Zusatznutzung angeboten.

Um hier das Kommunikations-System vielfältig nutzen zu können, weist der Prozessor benutzerspezifische Schnittstellen zur Kommunikation, wie Kameras, Sprechzeuge, Fernbedienung, Ein- und Ausgabe-Elemente auf. Hierzu weist der Prozessor auch Schnittstellen zur Steuerung und Überwachung von gebäudespezifischen Daten auf. Der Prozessor ist vor Ausfall dadurch geschützt, dass eine Notfallspannungsversorgung durch einen integrierten LI-Ionen-Akku vorgesehen ist. Ein Ausfall der primären Spannungsversorgung wird vom Gerät erkannt. Dieser Notstrom-Modus ermöglicht automatisch ein Aufrechterhalten der minimal notwendigen Notruffunktionen (nur Sprache) über eine Sekundär-Netzanbindung (Anruf in Notfallzentrale über integriertes oder externes GSM Modul oder über externes oder integriertes Analogtelefon). Im Falle einer aktiven Verbindung wird bei Stromausfall zuerst versucht die Verbindung über das gerade genutzte Medium aufrecht zu erhalten bevor auf das Sekundärmedium ausgewichen wird.

Die Redundanz besteht in der parallelen Nutzung von 2 komplett verschiedenen Netzwerken. Auch die Spannungsversorgung ist wegen Batterie redundant.

### Strategie 1: Aufrechterhaltung des Betriebs

- Box erkennt Stromausfall und erhält (eventuell bestehende) Verbindung über Batterie aufrecht.
- Sollte IP Primäranbindung (über Kabel) nicht verfügbar sein (z.B. Netzausfall, Kabeldefekt), wird das erkannt und eine Ersatzverbindung über UMTS aufgebaut.

### Strategie 2: Redundante Sprachverbindung für z.B Notfall über GSM

Die Box kann auch Priorisierte Verbindungen. Abhängig von der Priorität der Verbindung kann zur normalen IP Video/Audio Verbindung parallel ein GSM Anruf abgesetzt werden zu einer fix einstellbaren Telefonnumer. Auch SMS versenden ist damit möglich.

Dabei ist in vorteilhafter Weise die Teilnehmerbox mittels eines Scartkabels, S-Video Kabels, Composite A/V Kabels oder HDMI bzw. DVI Kabels an ein TV-Gerät anschließbar. Somit können bereits im Haushalt vorhandene visuelle Geräte für das erfindungsgemäße Video- und Kommunikations-System genutzt werden. Denn gerade der Fernseher ist auch für ältere Menschen als vertrautes Element im Haushalt anzusehen, so dass eine Umstellung auf eine PC-Bedienung nicht erforderlich ist. Mit dem TV-Gerät oder mit der Teilnehmerbox ist über Funk, Ethernet oder USB eine Kamera anschließbar. Die Kamera kann dabei von der Gegenstelle derart fokussiert und bewegt werden (PTZ), dass über sie auch eine Ferndiagnose festgestellt werden kann.

Zur Bedienung der Teilnehmerbox werden einfache Elemente vorgesehen, so wie beispielsweise ein Einknopf-Taster bzw. eine Fernbedienung mit individuell fix belegbaren Stationen, so dass insbesondere für ältere Menschen eine schnelle, einfache Handhabung des Systems gegeben ist. Dabei kann insbesondere zur Bildschirmsteuerung eine Fernbedienung verwendet werden, die eine Menüführung bereitstellt, wobei diese über ein einfaches Steuerkreuz mit OK-Taste bedient werden kann. Somit kann der Benutzer hier einfach durch Hoch- und Herunterfahren des Cursors mit dem Steuerkreuz die Funktion anwählen, die er wünscht. Die Farben des Bedienkreuzes oben/unten/links/rechts sind am Benutzerbildschirm mit diesen Vorzugsrichtungen als Standardfarben durchgängig gestaltet um eine intuitive Bendienung auch für ältere Personen zu erleichtern. Die Buttons der Fernbedienung sind mit leicht unterscheidbaren Symbolen oder Texturen versehen, die sich auch an der Bedienoberfläche wieder finden. Damit soll sehbeeinträchtigen Personen (z.B. Farbenblindheit) die Bedienung ermöglicht bzw. erleichtert werden.

Nach einer besonders vorteilhaften Weiterbildung des Video- und/oder Kommunikations-Systems ermöglicht die Teilnehmerbox über besondere Schnittstellen eine Einbindung von medizinischen Messgeräten. Somit besteht beispielsweise die Möglichkeit, dass über dieses System auch medizinische Daten (Vitaldaten) gemessen und auch übertragen werden, so z. B. Blutdruck, Puls, Blutsauerstoff, Blutzucker, Lungenvolumen, Gewicht, Herztöne, EKG, Körpertemperatur, Lungen- und Darmgeräusche. Diese medizinischen Messdaten werden auf einem Server gespeichert und können dann entsprechend von einem Arzt abgerufen werden, der so jeden Tag oder jede Stunde hier die medizinischen Daten abrufen kann.

Nach einer besonders vorteilhaften Weiterbildung der Erfindung verfügt die Teilnehmerbox über eine Software, die individuell auf den Benutzer programmierbar ist. So können beispielsweise aus dem näheren Umfeld des Benutzers Personen oder Adressen eingegeben werden, die unmittelbar vom Benutzer angesprochen werden sollen.

Mit dem System werden prinzipielle technische Möglichkeiten geboten das Leben zu Hause einfacher, fortschrittlicher und sicherer zu gestalten. Menschen können von zu Hause aus verschiedene Dienstleistungen maßgeschneidert auf den Personenkreis (z.B. Senioren, Sportler, ...) beziehen. Die Services bieten dabei zusätzlich die Möglichkeiten der visuellen Kommunikation. Ein Einsatz von erweiterten Services und Technologien - z. B. in Verbindung mit Feuermelder, Essensbestellung, usw. - ist damit leicht umsetzbar. Dabei ermöglicht die Serverplattform eine zentrale Datenspeicherung wie auch verteilte Daten-Speicherung und bietet damit höchste Sicherheitsstufe. Die Serververbindungen (Authentifizierung / Verschlüsselung) sind nach dem TLS Standard implementiert. Die Mediendatenverbindungen (Audio / Video) werden nach TLS Standard verschlüsselt bzw. nutzen einen Subteil dieses Standards (z.B. AES). Die Serverplattform erlaubt den Zugriff auf eine begrenzte und definierte Reihe von Endpunkt-Verbindungen und kontrolliert neben dem Datenaustausch auch die Möglichkeiten der Video/Audio Telefonie.

In Vorteilhafter Weise werden auch Betreiber von Dienstleistungen flexibel eingebettet und können von einem Call Center aus bzw. durch einen automatisierten Prozess Services auf der Box anbieten. Die Services werden besonders attraktiv, da die Dienstleister jederzeit auch auf die Video/Audio Telefonie als erweiterte Kommunikation zurückgreifen können. Sie können sogar Videos als Dienstleistung anbieten bzw. als Erweiterung ihres Services.

Aus dem System Design abgeleitete vorteilhafte Ausgestaltungen des Systems beinhalten:
1. Mehrpunkt-Videokonferenzen zwischen allen Kombinationen der Endpunkte
2. Zentrale Steuerung und Konfiguration aller Komponenten
   - Anpassung aller Box Einstellungen
   - Aufbewahrung von Aufzeichnungen aller Daten und Konfiguration auf dem Server
   - Aufnahme aller Daten auf dem Server (Incl. Telefonie-Zeiten, Kamera-Aktivitäten, Messungen, Servicedaten ...)
   - Hinzufügen / Entfernen von Benutzern, Konfigurationen von Rollen und Benutzerrechten
   - Individuelle Einstellung der Sprachen
3. Minimierter Implementierungsaufwand für ein Upgrade eines neuen Services für alle Boxen und Webapplicationen

Dabei ist eine 4-Teilnehmer-Konferenz in Verbindung mit Angehörigen, Freunden, Bekannten, Service-Centern und Medizinern im Sinne einer umfassenden sozialen, medizinischen und effizienten Aktivitäten sowie Betreuung möglich.

Es besteht ein Broadcast Video Streaming an ausgewählte Teilnehmer (individuelles IPTV / Radio). Eine eigens konzipierte Hardware optimiert auf IP Breitband Video Kommunikation die Notfallfunktionalität, das 2-stufige Redundanzkonzept, sowie ein dezentrales Datenverwahrungssystem und den zentralen Registrierungsserver.

Das System bietet medizinische Kommunikation mit Video als integralen Bestandteil der Patientenbetreuung. Dazu gehören auch Live-Monitoring, Broadcast und Konferenzschaltung. (Andere Lösungen bieten entweder nur Video und Datenlösungen, aber nicht integriert in Echtzeit.). Stichwort: Remote Stethoskop. Datenablesung/-übertragung in Echtzeit. Hinzu kommen umfangreiche Servicedienstleistungen, um den Teilnehmer optimal und individuell zu unterstützen, wie kundenspezifische vorbereitete Services und Informationsangebote, sowie ein Anrufbeantworter und Videomessage. Bereit gestellt wird eine dynamische Bandbreitennutzung, einsetzbar auch als zeitlich befristete Lösung (Leihstellung).

Das System umfasst Datenschnittstellen BDT, GDT und LDT Schnittstelle (z. B. Labordatentransfer), "On-demand" Modus (z.B. Satellitenverbindung), eine Zulassung im Klinikbereich (medizintechnische Zertifizierung), Monitoring, Video I/O Analog und digital (Kameras), SD Kartenfunktionalität (Multimedia Files I/O), Media Center (Shop für Musik / Filme / Lehrvideos), eigene Vitaldateneinsicht am TV, E-card / Elektronische Krankenakte Einbindung, eine PDA Pflegedokumentation Einbindung, Eigene PDA Software ins System integriert (Portierung der Applikation oder Webapplikation), Sprachbefehlserkennung, klare Strukturierung der Zugriffsrechte (userspezifische Freigabe kontrolliert von dem Ersteller Operator), Benutzerauthentifizierung über Finger Print Scan, Iris Scan (allg. Biometrie), und/oder den Einsatz von Wireless USB.

Das System nutzt unter anderem die Protokolle SIP, Zigbee, internes Kommunikationsprotokoll verschlüsselt. Dabei ist Recording Video / Picture Snapshot zentral am Server kundenspezifisch abspeicherbar (Media Center). Auch ist ein Datenexport für statistische Auswertungen möglich.

Zudem ist ein Billing System integriert (Call Statistik, Gesprächsdauer, genutzte Services). Am Bildschirm besteht die Möglichkeit einer Anzeige wie viele Minuten noch frei zur Verfügung sind.

In vorteilhafter Weise umfasst das System noch weitere Möglichkeiten, wie: geschlossene Anrufgruppen sind konfigurierbar im System, Gruppenrufe, Gehörlosenmodus (visuelle Signalisierung der Anrufe. Extern angeschlossenes Blinklicht).Armbanduhr vibriert.

Die Box ist Rüttel-, Wasser- und Temperatur- sowie Sturzfest ausgebildet.

Das System enthält weiter OMAP 3D visualisierte User Interfaces (openGL), Spiele zu Therapeutischen Zwecken (Demenz, Hirntraining), Spiele im Netzwerk (soziale Interaktion der Teilnehmer untereinander) oder die Möglichkeit von Übertragung der Messe aus der lokalen Kirche an registrierte Teilnehmer.

Vorhanden sind Kalender Features für Endteilnehmer (Kalender ähnlich Outlook, aber Altengerecht + Erinnerungsfunktion), Multiuser Box (mittels Authentifizierung), ein Multinorm Fernsehsystem (NTSC, PAL), sowie VGA, SCART, HDTV.

Auch können Bilder der operativen Teilnehmer aus aktiven Videoverbindungen heraus generiert werden und werden in der Datenbank zum Teilnehmer abgelegt. Diese Bilder werden in allen Teilnehmerspezifischen Vorgängen im System angezeigt. (Z.B. Bild des Teilnehmers in der Kontaktliste: Bei Anruf wird Bild vorab gezeigt, um zu sehen wer anruft, ...). Hierzu ist eine Druckeranbindung an die Box gegeben.

Dabei sind Lokale Werbeeinschaltungen (Redaktionssystem), sowie die Zeitung lokal / kundenspezifisch aufbereitet (Nachrichtendienst) möglich, wobei eine Seniorenbörse (Interessengemeinschaft) eine Aktivitätsplattform anbietet über Sites geografische Standortbestimmung, über Server, über Inserate Schalten und an Zielgruppe verteilen, die z.B. in der selben Stadt wohnen.

Die Box ist ein MMS Empfänger, wobei ein Videobild während dem Call von jeder Seite aktivierbar bzw. deaktivierbar ist (Video Mute). Es ist auch möglich einen Anruf anzunehmen bzw. aufzubauen, ohne das eigene Kamerabild zu senden. Klingeltöne sind Hochladbar, wobei hier spezielle Klingeltörne je nach Anrufer vergeben werden können. Bei Notruf erfolgt automatische Übertragung der Video Bilder bevor der Call akzeptiert ist, Bei normalem Call soll sich Kamera erst bewegen, wenn der Call angenommen wird

Das System ist Sprachspezifisch (Multilanguage) ausgelegt, wobei ein spezifisches PC GUI für ältere Personen (Farbcodierung) zur visuellen Unterstürzung gegeben ist.

Die normale primäre Spannungsversorgung der Box beinhaltet zusätzlich eine Batterie bzw. kann um eine externe USV erweitert werden. Auf dem Server befindet sich ein integriertes Abrechnungssystem.

Die Kamera kann in der Box integriert sein. Die Fernbedienung mit farbcodierten integrierten Steuerkreuz und einer OK Taste dient zur Bedienung des Teilnehmersystems mittels Bildschirmmenüführung. Hierbei werden auf dem Bildschirmmenü des Teilnehmers über die Farben dem Anwender Hilfestellung gegeben.

### Beschreibung der Zeichnungen

Ein Ausführungsbeispiel der Erfindung ist in den Zeichnungen rein schematisch dargestellt und wird nachfolgend näher beschrieben. Es zeigt:
- Figur 1: einen Systemüberblick über das erfindungsgemäße Video- und/oder Kommunikations-System;
- Figur 2: eine Teilnehmerlösung mit Box;
- Figur 3: eine Teilnehmerbox mit Kamera und Fernseher und Anbindungsmöglichkeiten;
- Figur 4: eine Schnellwahltasten-Einrichtung;
- Figur 5: eine Bildschirmsteuerung;
- Figur 6: eine Abbildung einer Video-Konferenzschaltung auf dem Bildschirm;
- Figur 7: ein individuelles Teilnehmermenü;
- Figur 8: eine Abbildung einer Web-Applikation auf dem Bildschirm;
- Figur 9: ein Blockschaltbild für die Hardware der Teilnehmerbox sowie
- Figur 10: ein Blockschaltbild mit den einzelnen Servertypen des Video- und/oder Kommunikations-Systems.

### Ausführungsbeispiele

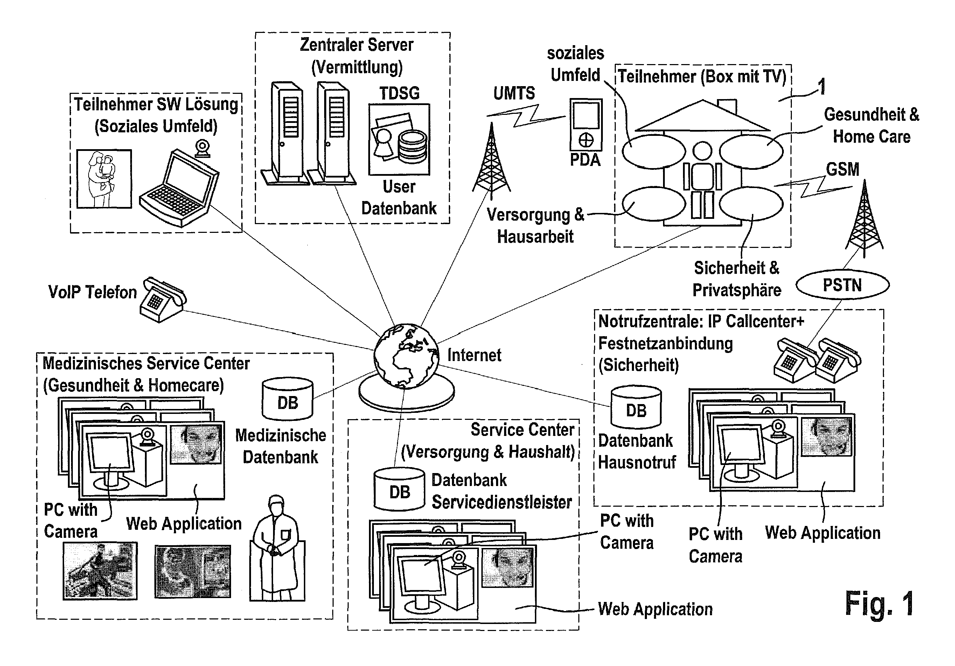

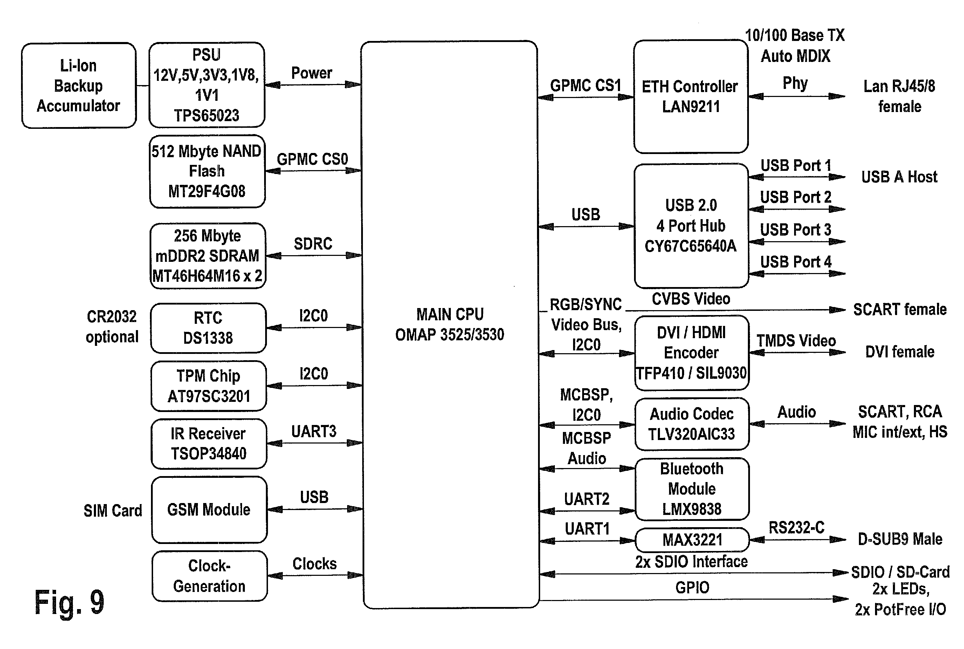

Die Figuren 1 bis 7 zeigen ein Video- und/oder Kommunikations-System, welches eine einem Teilnehmer oder Nutzer zugeordnete Teilnehmerbox 1 umfasst, die den Zugang zu einem Netzwerk, wie in der Figur 1 dargestellt ist, bereitstellt. Zur visuellen Kommunikation wirkt die Teilnehmerbox 1 mit einem Bildschirm 2 zusammen, wobei die Teilnehmerbox 1 hier mit einem Digital-Medien-Prozessor 3, dargestellt in Figur 9, bestückt ist, der über GSM, UMTS, Kabel, ADSL sowie Satellit über ein IP Netzwerk (verbunden über Ethernet bzw. WLAN Schnittstelle) mit Datenbanken korrespondieren kann. Dabei stellt der Digital-Medien-Prozessor 3 auch die Verbindung zwischen den Einzelteilnehmern und/oder Teilnehmergruppen her, wobei die Verbindungen und/oder Konferenzverbindungen insbesondere auf Bedürfnisse älterer Menschen abgestimmt sind. Die programmierten Verbindungen umfassen dabei neben dem sozialen Umfeld der Person auch programmierte Verbindungen zur Analyse und Überwachung von medizinischen Daten, Notrufverbindungen sowie Betreuungs- und Überwachungsdaten der Person. Mit dem "Digital-Medien-Prozessor" ist nicht nur der OMAP Prozessor, sondern die gesamte Hardware-Plattform gemeint. Auch der OMAP Prozessor ist nur als Beispiel zu sehen und kann künftig durch neue Prozessoren ersetzt werden.

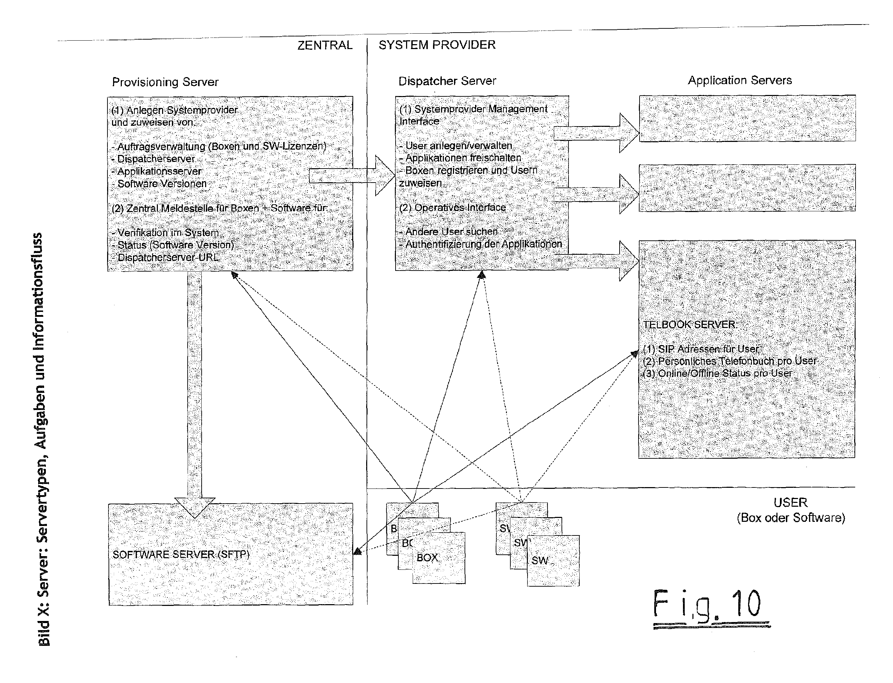

Die technische Registrierung der Boxen und die Verteilung der Lizenzen und Applikationen zu den Systemanbietern erfolgt am zentralen Server (=Provisioning Server). Die Systemnutzer sind auf einem zentralen Server (=Dispatcher Server), hier einer zentralen Kundendatenbank angelegt, können aber auch auf dezentralen Servern verteilt sein. Wenn es mehrere Systemanbieter gibt, kann es auch mehrere Dispatcherserver dezentral geben. Jeder Systemprovider verwaltet seine eigenen Kunden selbst und ordnet jedem Kunden die bestellten Applikationen und Lizenzen zu, wie dies in der Figur 10 zu erkennen ist. Sämtliche dienstleistungsspezifischen Daten im Zusammenhang mit dem Teilnehmer können auch von dezentralen Servern in der Verantwortung des Dienstleisters verwaltet werden, welche mit dem zentralen Server kommunizieren.

Der Prozessor weist benutzerspezifische Schnittstellen zur Kommunikation, wie Kameras, Sprechzeuge, Fernbedienungen sowie Ein- und Ausgabemittel auf. Auch weist der Prozessor Schnittstellen zur Steuerung und Überwachung von gebäudespezifischen Daten auf. Damit das Kommunikations-System vor Stromausfall gewappnet ist, schaltet der Prozessor bei Ausfall der Speisung einer Primäranbindung automatisch auf eine Sekundäranbindung, hier einen Akkumulator, wie im Blockschaltbild der Figur 9 zu erkennen ist, um. Dies kann auch eine Batterie sein. Die Teilnehmerbox 1 ist mittels eines Scartkabels an ein TV-Gerät 2 anschließbar. Somit können dem Teilnehmer vertraute Geräte nutzbar gemacht werden. Um hier die visuelle Kommunikation bereitzustellen, ist mit dem TV-Gerät oder mit der Teilnehmerbox 1 über Funk, Ethernet oder USB eine Kamera 4 anschließbar. Dabei kann die Kamera 4 derart ausgestaltet sein, dass sie für Ferndiagnosen genutzt werden kann.

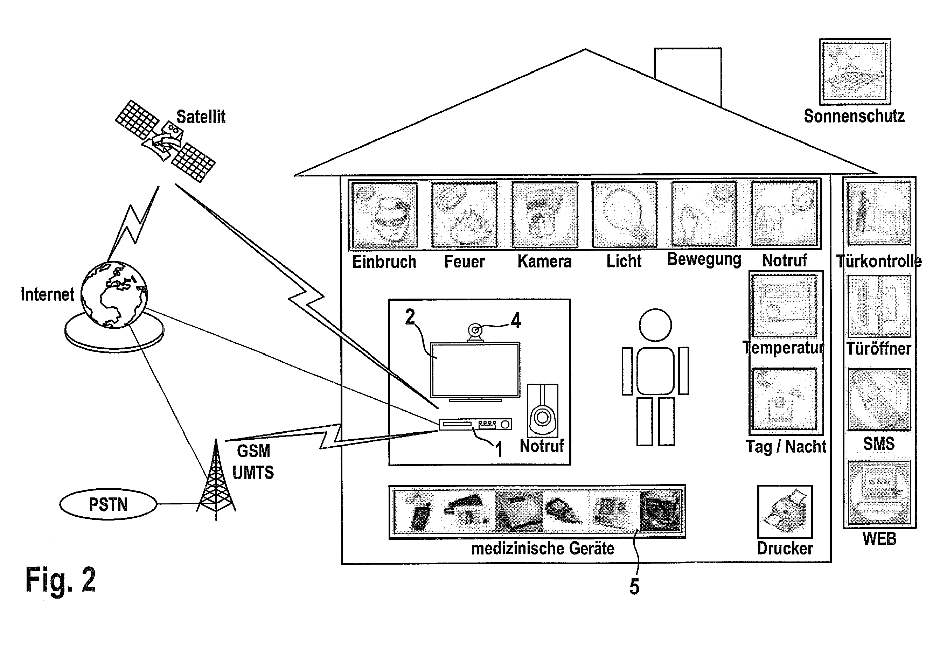

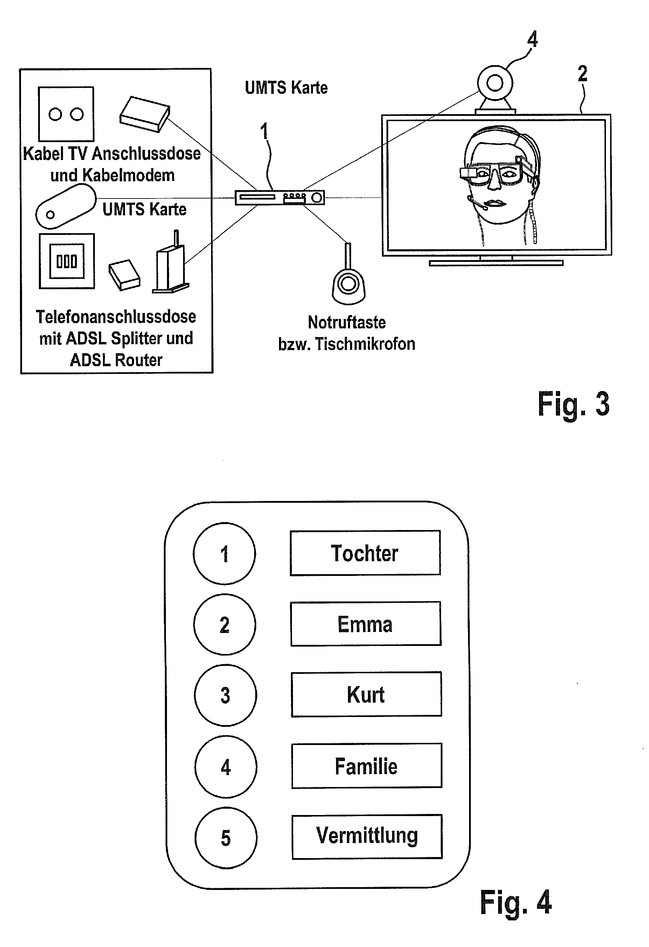

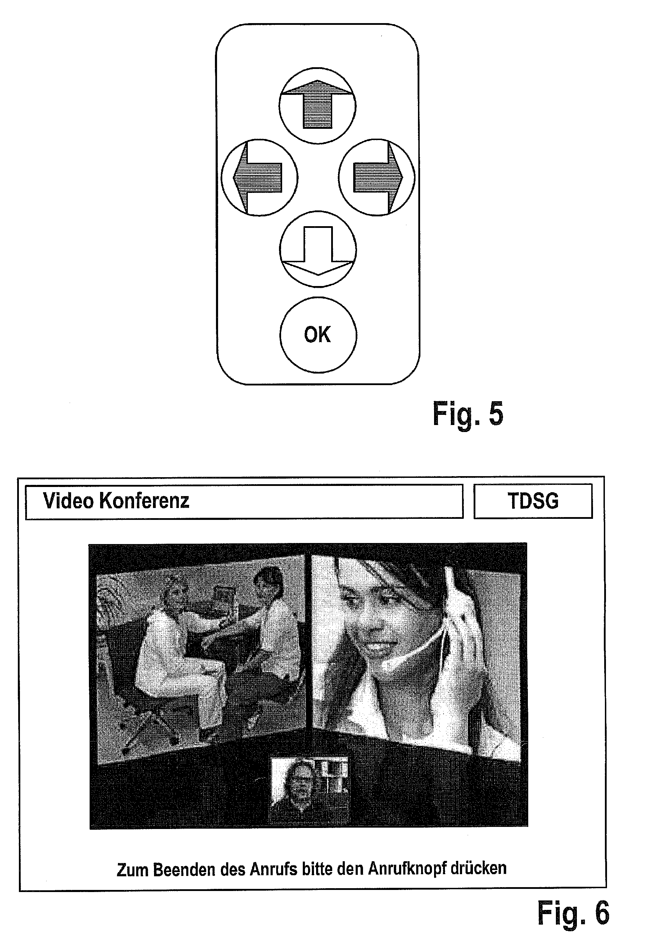

Zur Bedienung der Teilnehmerbox 1 wird vorgesehen, dass beispielsweise ein Einknopftaster, eine Fernbedienung mit individuell fix belegbaren Stationen, dargestellt in der Figur 4, verwendbar sind. Um eine einfache und für ältere Menschen handhabbare Steuerung zur Verfügung zu stellen, wird vorgesehen, dass zur Bildschirmsteuerung eine Fernbedienung verwendbar ist, die zur Menüführung ein Steuerkreuz mit OK-Taste, wie dies in der Figur 5 gezeigt wird, aufweist. Dabei ermöglicht die Teilnehmerbox 1 über Schnittstellen, die Einbindung von medizinischen Messgeräten 5, wie sie in der Figur 2 angedeutet sind. Diese Messgeräte 5 können insbesondere dazu verwendet werden, dass hier Blutdruck, Zucker und andere Werte gemessen und entsprechend übertragen werden, so dass hier der Hausarzt einen aktuellen Stand der Gesundheitsdaten hat.

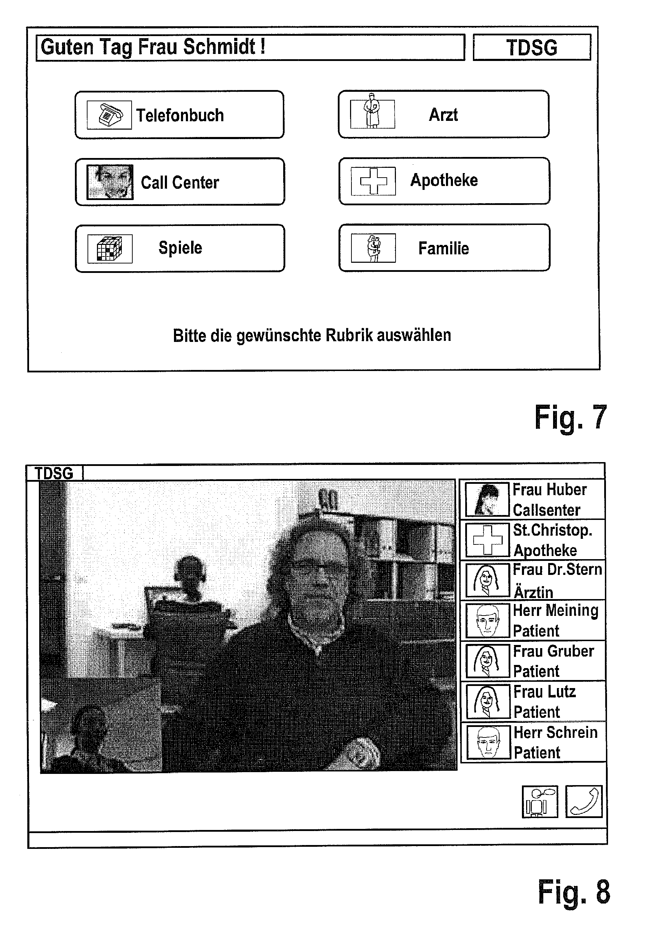

In Weiterbildung der Erfindung verfügt die Teilnehmerbox 1 über eine Software, die individuell auf den Benutzer programmierbar ist, wie dies in der Figur 7 beispielsweise dargestellt ist.

In Weiterbildung des Video- und/oder Kommunikations-Systems kann auch vorgesehen werden, dass zu der gegebenen Kommunikation auch eine Web-Applikation hinzugefügt werden kann.

### Bezugszeichenliste

- 1: Teilnehmerbox
- 2: Bildschirm
- 3: Prozessor
- 4: Kamera
- 5: Medizinische Messgeräte

## Patentansprüche

1. Video- und/oder Kommunikations-System umfassend eine einem Teilnehmer oder Nutzer zugeordnete Teilnehmerbox (1), die den Zugang zu einem Netzwerk bereitstellt, wobei zur visuellen Kommunikation die Teilnehmerbox (1) mit einem Bildschirm (2) zusammenwirkt, und die Teilnehmerbox (1) mit einem Digital-Medien-Prozessor (3) bestückt ist, der über GSM, UMTS, Kabel, ADSL oder Satellit mit Datenbanken, mit Einzelteilnehmern und oder Teilnehmergruppen eine Verbindung herstellt, wobei die Verbindungen und/oder Konferenzverbindungen insbesondere auf Bedürfnisse älterer Menschen abgestimmt sind, und wobei die programmierten Verbindungen neben dem sozialen Umfeld der Person auch programmierte Verbindungen zur Analyse und Überwachung von medizinischen Daten mittels
- Echtzeitübertragung,
- Live-Monitoring,
- sowie unter Nutzung von Live Broadcast- und Live-Konferenzkommunikation,
- Store and Forward Prinzip (=Lokale Speicherung und dann an den Server übertragen),
Notrufverbindungen, sowie Betreuungs- und Überwachungsdaten der Person umfassen und wobei die individuellen Daten des Nutzers auf einer dezentralen Kundendatenbank und mehreren dezentralen Datenbanken speicher- und abrufbar sind.

2. Video- und/oder Kommunikations-System nach Anspruch 1,
**dadurch gekennzeichnet,**
**dass** der Prozessor (3) benutzerspezifische Schnittstellen zur Kommunikation wie Kameras, Sprechzeuge, Fernbedienung, Ein- und Ausgabe-Elemente aufweist.

3. Video- und/oder Kommunikations-System nach Anspruch 1,
**dadurch gekennzeichnet,**
**dass** der Prozessor (3) Schnittstellen zur Steuerung und Überwachung von gebäudespezifischen Daten aufweist.

4. Video- und/oder Kommunikations-System nach Anspruch 1,
**dadurch gekennzeichnet,**
**dass** der Prozessor (3) eine bei Ausfall der Speisung einer Primäranbindung automatisch auf eine Sekundäranbindung schaltet.

5. Video- und/oder Kommunikations-System nach Anspruch 1,
**dadurch gekennzeichnet,**
**dass** die Teilnehmerbox (1) mittels eines Scartkabels, S-Video Kabels, Composite A/V Kabels oder HDMI bzw. DVI Kabels an ein TV-Gerät anschließbar ist.

6. Video- und/oder Kommunikations-System nach Anspruch 1,
**dadurch gekennzeichnet,**
**dass** mit dem TV-Gerät oder mit der Teilnehmerbox (1) über Funk, Ethernet oder USB eine digitale Kamera anschließbar ist.

7. Video- und/oder Kommunikations-System nach Anspruch 1,
**dadurch gekennzeichnet,**
**dass** das die Kamera (4) für eine Ferndiagnose nutzbar ist.

8. Video- und/oder Kommunikations-System nach Anspruch 1,
**dadurch gekennzeichnet,**
**dass** zur Bedienung der Teilnehmerbox (1) ein Einknopf-Taster bzw. eine Fernbedienung mit individuell fix belegbaren Stationen verwendbar sind.

9. Video- und/oder Kommunikations-System nach Anspruch 1,
**dadurch gekennzeichnet,**
**dass** zur Bildschirmsteuerung eine Fernbedienung verwendbar ist, die zur Menüführung über ein Steuerkreuz sowie Farbcodierung mit OK-Taste verfügt.

10. Video- und/oder Kommunikations-System nach Anspruch 1,
**dadurch gekennzeichnet,**
**dass** die Teilnehmerbox (1) über Schnittstellen verfügt, die die Einbindung von medizinischen Messgeräten (5) ermöglicht.

11. Video- und/oder Kommunikations-System nach Anspruch 1,
**dadurch gekennzeichnet,**
**dass** die Teilnehmerbox (1) über eine Software verfügt, die individuell auf den Benutzer programmierbar ist.

12. Video- und/oder Kommunikations-System nach Anspruch 1,
**dadurch gekennzeichnet,**
**dass** die Systemkomponenten voll IPv6 kompatibel sind.

13. Video- und/oder Kommunikations-System nach Anspruch 1,
**dadurch gekennzeichnet,**
**dass** das System ein Überwachungssystem und Bestätigungssystem für die Medikamenteneinnahme aufweist.

14. Video- und/oder Kommunikations-System nach Anspruch 1,
**dadurch gekennzeichnet,**
**dass** das System einen Anrufbeantworter und eine Videomessage umfasst.

15. Video- und/oder Kommunikations-System nach Anspruch 1,
**dadurch gekennzeichnet,**
**dass** das System eine dynamische Bandbreitennutzung aufweist.
